# FASCICULE DE BREVET EUROPEEN

(11) **EP 0 781 684 B1**
(45) Date de publication et mention de la délivrance du brevet: **23.05.2001**
(21) Numéro de dépôt: 96402673.6
(22) Date de dépôt: 09.12.1996
(51) Int. Cl.: B60N 2/18

(54) **Siège arrière de véhicules automobiles**
Rücksitz für Kraftfahrzeuge
Backseat for motor vehicles

(30) Priorité: 27.12.1995 FR 9515583
(43) Date de publication de la demande: 02.07.1997
(73) Titulaire: AUTOMOBILES PEUGEOT, 75116 Paris (FR); AUTOMOBILES CITROEN, 92200 Neuilly-sur-Seine (FR)
(72) Inventeur: Levitre, Gilles, 92230 Gennevilliers (FR)
(74) Mandataire: Lanceplaine, Jean-Claude

(56) Documents cités:
- EP-A- 0 226 159
- DE-A- 3 436 509
- DE-A- 4 414 608
- US-A- 4 583 781
- US-A- 4 720 141
- PATENT ABSTRACTS OF JAPAN vol. 008, no. 258 (M-340), 27 Novembre 1984 & JP 59 130745 A (TOUKIYOU SHIITO KK), 27 Juillet 1984,
- PATENT ABSTRACTS OF JAPAN vol. 009, no. 098 (M-375), 27 Avril 1985 & JP 59 223527 A (HONDA GIKEN KOGYO KK), 15 Décembre 1984,

## Description

La présente invention a pour objet un siège de véhicules automobiles, du type comprenant un dossier et une assise formés d'une armature rigide et d'un garnissage.

Dans les véhicules automobiles du type trois corps, l'assise de la banquette arrière est le plus souvent fixe et solidaire du plancher du véhicule, tandis que le dossier est éventuellement rabattable.

L'ergonomie de l'assise est donc conçue en fonction de la taille moyenne des passagers ce qui pénalise aussi bien les personnes de petite que de grande taille.

Pour certains véhicules automobiles, l'ensemble de l'assise du siège arrière est réglable en hauteur.

Mais, cette disposition ne donne pas entièrement satisfaction pour plusieurs raisons.

En effet, elle impose une position en hauteur pour tous les passagers du siège arrière, qui peuvent avoir une taille et une morphologie très différentes.

De plus, l'assise, en position haute, est suspendue et doit supporter le poids des passagers.

Un autre inconvénient réside dans le fait que l'accostage entre l'assise et l'environnement périphérique est particulièrement délicat à assurer par rapport au plancher du véhicule et au dossier du siège.

Par conséquent, le réglage en hauteur de l'ensemble de l'assise est une solution restrictive dans son utilisation, coûteuse et particulièrement contraignante à mettre en oeuvre.

On connaît dans le brevet JP-A-59 22 3527 correspondant au préambule de la revendication indépendante un siège arrière de véhicule automobile qui comprend un dossier et une assise formés d'une armature rigide et d'un garnissage. L'assise comporte une partie fixe incluant ladite armature rigide et ledit garnissage et au moins deux coussins.

L'invention a pour but d'éviter ces inconvénients en proposant un siège arrière qui permet un réglage en hauteur et une souplesse d'utilisation pour chaque passager arrière et qui garantit une finition et des accostages périphériques de qualité.

L'invention a donc pour objet un siège arrière de véhicule automobile, du type comprenant un dossier et une assise formés d'une armature rigide et d'un garnissage, l'assise comportant une partie fixe incluant ladite armature rigide et ledit garnissage et au moins deux coussins, caractérisé en ce que lesdits coussins sont intégrés dans l'assise et comportent chacun une armature et un garnissage, en ce que chaque coussin est monté, au niveau de sa partie avant, articulé sur au moins un axe transversal à la direction longitudinale du véhicule et comporte des moyens de réglage en hauteur de la position de ce coussin et des moyens de verrouillage dudit coussin dans la position désirée et en ce que lesdits moyens de réglage en hauteur de la position de chaque coussin comprennent deux leviers parallèles à la direction longitudinale du véhicule et montés chacun pivotant verticalement sur un élément solidaire du plancher du véhicule, chacun desdits leviers comportant à son extrémité libre un crochet dirigé vers le haut et pénétrant dans une lumière ménagée dans l'armature du coussin correspondant pour retenir ledit coussin en cas de choc.

Selon d'autres caractéristiques de l'invention:
- chaque coussin est disposé dans un logement ménagé dans l'assise,
- chaque coussin comporte un organe de rappel en position haute,
- l'organe de rappel est formé par un ressort à spirale dont une extrémité est reliée à la platine et dont l'autre extrémité est reliée à l'axe de liaison des deux leviers,
- les moyens de verrouillage du coussin dans la position désirée sont formés par un secteur denté ménagé sur un desdits leviers et par un verrou monté pivotant au moyen d'un axe d'articulation sur l'aile de la platine comportant ce levier, ledit verrou étant pourvu, à son extrémité opposée à celle comportant l'axe d'articulation, de dents coopérant avec ledit secteur denté,
- les moyens de verrouillage comprennent un organe de déplacement du verrou entre une position de verrouillage dans laquelle les dents du verrou sont engrenées avec les dents du secteur denté et une position de déverrouillage dans laquelle les dents dudit verrou sont dégagées des dents dudit secteur denté,
- l'organe de déplacement du verrou est formé par un levier en forme de V monté pivotant sur l'aile de la platine comportant ce verrou, l'extrémité d'une branche du levier étant munie d'un trou oblong dans lequel pénètre un ergot solidaire du verrou et l'extrémité de l'autre branche de ce levier étant reliée à une sangle de commande du pivotement dudit levier et dudit verrou,
- l'axe d'articulation dudit verrou comporte un ressort de torsion pour le rappel dudit verrou en position de verrouillage sur le secteur denté du levier correspondant.

D'autres caractéristiques et avantages de l'invention apparaîtront au cours de la description qui va suivre, donnée uniquement à titre d'exemple et faite en référence aux dessins annexés, sur lesquels :
- la Fig. 1 est une vue schématique en perspective d'un siège arrière selon l'invention,
- la Fig. 2 est une vue schématique en coupe transversale d'un coussin du siège arrière selon l'invention,
- la Fig. 3 est une vue à plus grande échelle du coussin de la Fig. 2 montrant les moyens de réglage en hauteur et de verrouillage de ce coussin,
- la Fig. 4 est une vue en coupe selon la ligne 4-4 de la Fig. 3,
- la Fig. 5 est une vue schématique en perspective des moyens de réglage en hauteur et de verrouillage d'un coussin du siège selon l'invention,
- la Fig. 6 est une vue en coupe selon la ligne 6-6 de la Fig. 3,
- la Fig. 7 est une vue en coupe selon la ligne 7-7 de la Fig. 3.

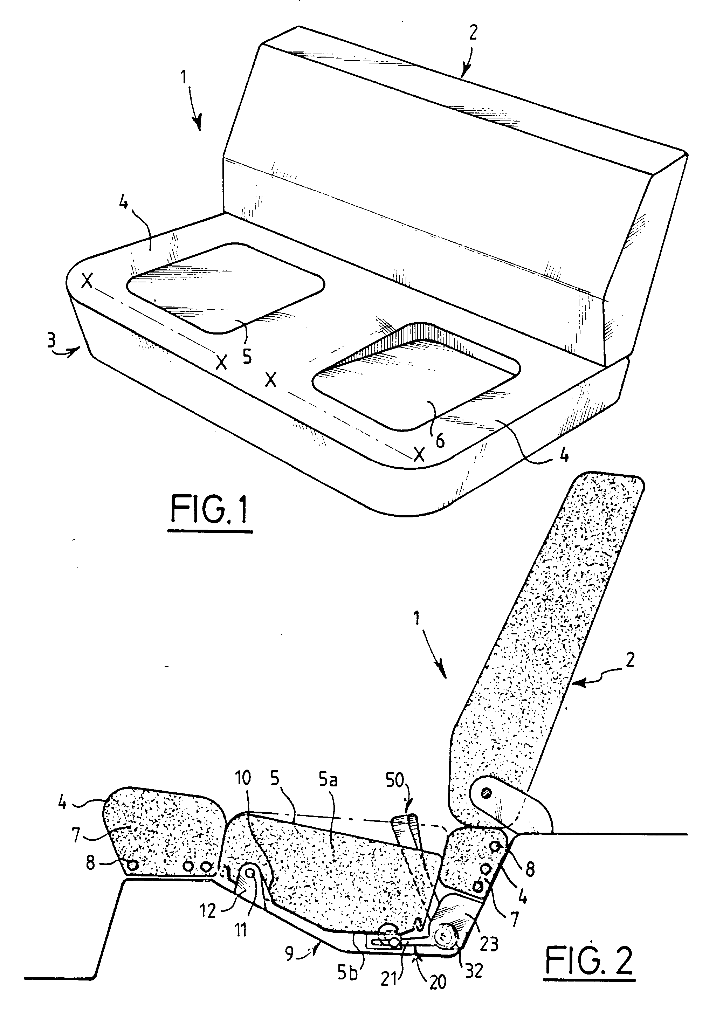

Sur la Fig. 1, on a représenté un siège arrière désigné dans son ensemble par la référence 1 et qui se compose d'un dossier 2 et d'une assise 3.

L'assise 3 comprend une partie fixe 4 et au moins deux coussins, respectivement 5 et 6, réglables en hauteur et intégrés dans ladite assise 3.

Chaque coussin 5 ou 6 est disposé dans un logement 3a découpé dans l'assise 3. Ainsi, chaque coussin 5 ou 6 est réglable indépendamment.

La partie fixe 4 de l'assise 3 est composée d'un garnissage 7 posé sur une armature 8 par exemple en fils.

Cette partie fixe 4 de l'assise 3 est accostée au plancher 9 du véhicule sur tout son pourtour et est au contact du garnissage du dossier 2.

Le plancher 9 du véhicule a la forme d'une cuvette au-dessous de l'assise 3, ainsi que représenté à la Fig. 2.

Chaque coussin 5 et 6 est monté, au niveau de sa partie avant, articulé sur au moins un axe transversal X-X à la direction longitudinale du véhicule et comporte des moyens 20 de réglage en hauteur de la position de ce coussin et des moyens 50 de verrouillage dudit coussin dans la position désirée.

En se reportant maintenant aux figures 2 à 6, on va décrire les moyens de réglage en hauteur et de verrouillage de la position d'un coussin, les moyens de réglage en hauteur et de verrouillage de l'autre coussin étant identiques.

Le coussin 5 se compose d'un garnissage 5a posé sur une armature 5b par exemple en tôle.

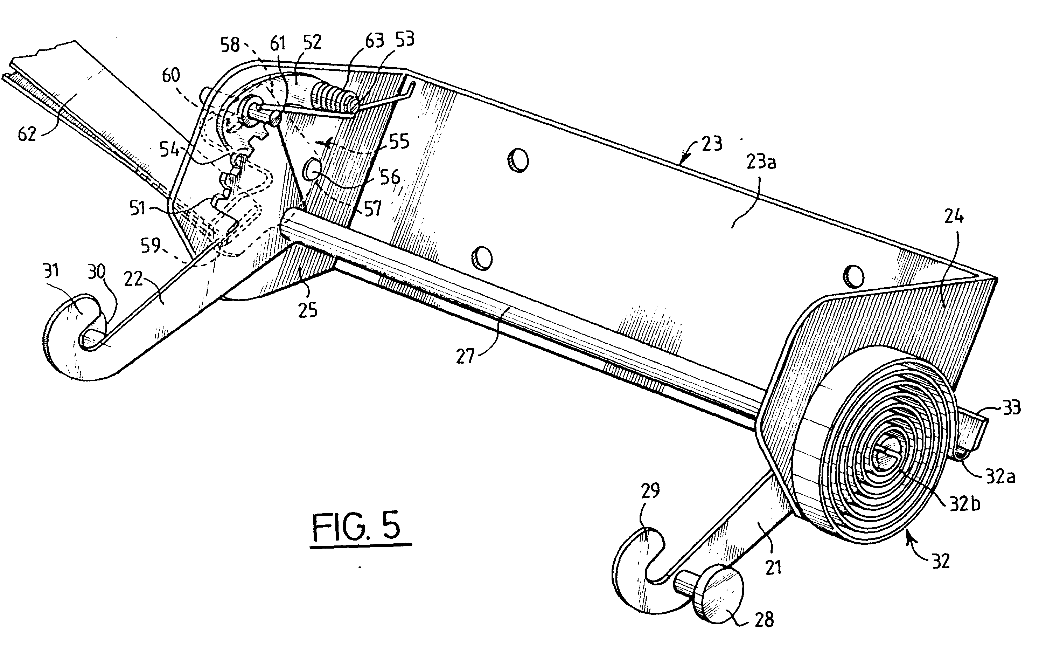

Le coussin 5 est monté articulé par l'intermédiaire de deux pattes 10 solidaires de l'armature 5b de ce coussin 5 sur un axe transversal 11 qui est lui même solidaire du plancher 9 par l'intermédiaire de deux pattes 12 (Fig. 4).

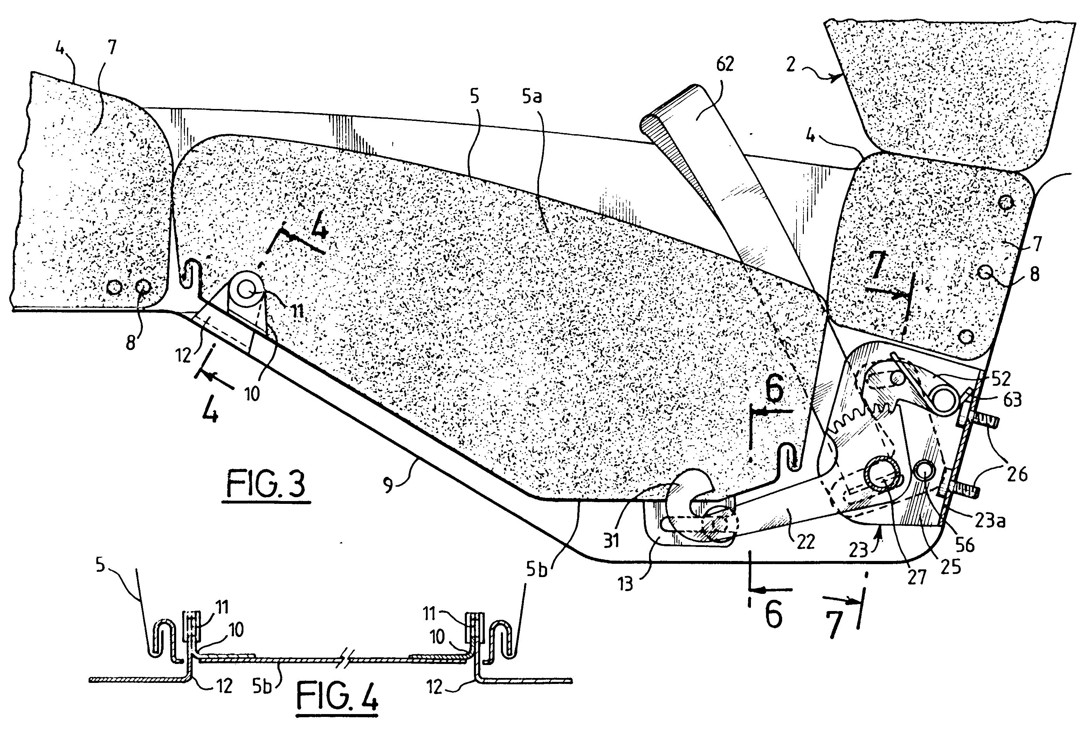

Ainsi que représenté sur les figures 3 et 5 à 7, les moyens 20 de réglage en hauteur de la position du coussin 5 comprennent deux leviers, respectivement 21 et 22, parallèles à la direction longitudinale du véhicule.

Les leviers 21 et 22 sont montés chacun pivotant dans un plan vertical sur une aile, respectivement 24 et 25, d'une platine 23 en forme de chape. Les ailes 24 et 25 sont parallèles entres elles et perpendiculaires à la partie centrale 23a de la platine 23 qui est fixée sur le plancher 9 du véhicule par exemple au moyen de vis 26.

Les leviers 21 et 22 sont rendus solidaires l'un de l'autre par l'intermédiaire d'un axe transversal 27.

Le levier 21 comporte à son extrémité libre un pion épaulé 28 perpendiculaire à ce levier 21 et qui coopère avec une rampe 13 fixée à la partie inférieure et à l'arrière de l'armature 5b du coussin 5.

D'autre part, le levier 21 comporte également à son extrémité libre un crochet 29 dirigé vers le haut et pénétrant dans une lumière 14 ménagée dans l'armature 5b du coussin 5 pour retenir ce coussin 5 en cas de choc.

Le levier 22 comporte aussi à son extrémité libre un pion épaulé 30 perpendiculaire à ce levier 22 et qui coopère avec une rampe 15 fixée à la partie inférieure et à l'arrière de l'armature 5b du coussin 5.

Ce levier 22 comporte à son extrémité libre un crochet 31 dirigé vers le haut et pénétrant dans une lumière 16 ménagée dans l'armature 5b du coussin 5 pour retenir ledit coussin 5 en cas de choc.

Par ailleurs, le coussin 5 qui est monté déplacable en hauteur autour de l'axe 11, comporte un organe de rappel 32 en position haute qui agit sur ledit coussin 5 par l'intermédiaire de l'ensemble constitué par l'axe transversal 27, les leviers 21 et 22, les pions épaulés 28 et 30 et les glissières 13 et 15.

Ainsi que représenté à la figure 5, cet organe de rappel est formé par un ressort à spirale 32 monté sur la face externe de l'aile 24 de la platine 23 et dont une extrémité 32a est reliée à l'aile 24 de la platine 23 par l'intermédiaire d'une patte 33 et dont l'autre extrémité 32b est reliée à l'axe 27 de liaison des deux leviers 21 et 22.

Ainsi, sous l'effort exercé par le ressort à spirale 32, les leviers 21 et 22 sont soulevés et maintiennent le coussin 5 en position haute.

Comme représenté sur les figures 3, 5 et 7, les moyens 50 de verrouillage du coussin 5 dans la position désirée sont formés, d'une part, par un secteur denté 51 ménagé à l'extrémité du levier 22 opposée à celle comportant le crochet 31 et, d'autre part, par un verrou 52 monté pivotant au moyen d'un axe d'articulation 53 sur l'aile 25 de la platine 23 comportant ledit levier 22.

Ce verrou 52 est pourvu, à son extrémité opposée à celle comportant l'axe d'articulation 53, de dents 54 coopérant avec le secteur denté 51 du levier 22.

Les moyens 50 de verrouillage du coussin 5 dans la position désirée comprennent également un organe 55 de déplacement du verrou 52 entre une position de verrouillage dans laquelle les dents 54 du verrou 52 sont engrenées avec les dents du secteur denté 51 et une position de déverrouillage dans laquelle les dents 54 dudit verrou 52 sont dégagées des dents dudit secteur denté 51.

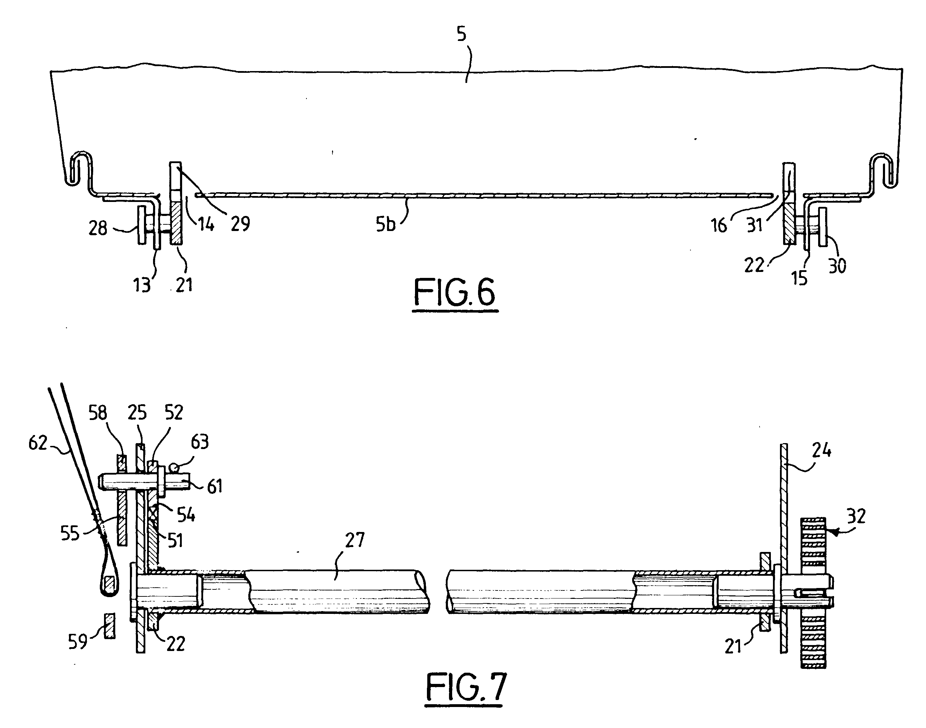

Comme représenté sur les figures 5 et 7, l'organe de déplacement du verrou 52 est formé par un levier 55 en forme de V monté pivotant sur la face externe de l'aile 25 de la platine 23 comportant le verrou 52.

Ce levier 55 en forme de V est monté pivotant sur l'aile 25 au moyen d'un axe 56 disposé au sommet 57 des deux branches 58 et 59 dudit levier 55.

L'extrémité de la branche 58 du levier 55 en forme de V est muni d'un trou oblong 60 dans lequel pénètre un ergot 61 solidaire du verrou 52 et l'extrémité de la branche 59 est reliée à une sangle 62 de commande du pivotement dudit levier 55 et dudit verrou 52, comme on le verra ultérieurement.

Enfin, l'axe d'articulation 53 du verrou 52 comporte un ressort de torsion 63 pour le rappel du verrou 52 en position de verrouillage sur le secteur denté 51 du levier 22.

Pour régler la hauteur du coussin 5, le passager procède de la façon suivante.

Le passager tire sur la sangle 62 ce qui a pour effet de faire pivoter le levier 55 autour de l'axe 56 de façon à soulever le verrou 52 par l'intermédiaire du trou oblong 60 et de l'ergot 61.

Ainsi, les dents 54 du verrou 52 se dégagent des dents du secteur denté 51 du levier 22 et sous l'effet du ressort à spirale 32 qui agit sur l'axe d'articulation 27, les leviers 21 et 22 pivotent vers le haut entraînant de ce fait, un déplacement vers le haut du coussin 5 par l'intermédiaire des pions épaulés 28 et 30 et des rampes 13 et 15.

Dès que le passager a trouvé la position idéale, il relâche la sangle 62 de telle manière que sous l'action du ressort de torsion 63 les dents 54 du verrou 52 viennent s'engréner sur les dents du secteur denté 51 afin de bloquer le coussin 5 dans la position désirée par l'intermédiaire des leviers 21 et 22, des pions épaulés 28 et 30 et des rampes 13 et 15.

En cas de choc, le coussin 5 est maintenu par les crochets 29 et 31.

Le réglage en hauteur du coussin 6 s'effectue de manière identique.

Ainsi, la hauteur de chaque coussin 5 ou 6 est réglable indépendamment, tandis que les autres portions de l'assise 3 sont fixes.

Pour cela, chaque coussin 5 ou 6 est disposé au-dessus du plancher 9 qui a la forme d'une cuvette au-dessous des coussins 5 et 6. La position de chaque coussin 5 ou 6 peut être réglée au-dessus ou au-dessous de sa position normale.

Le siège arrière selon l'invention permet donc un réglage en hauteur de chaque coussin et un ajustement des bourrelets latéraux de la partie fixe de l'assise en fonction de la taille et de la morphologie des passagers , on obtient ainsi une grande souplesse d'utilisation pour chaque passager.

Ainsi, le réglage en hauteur de chaque coussin permet d'ajuster les bourrelets latéraux de l'assise puisque ceux-ci sont fixes et indépendants des coussins mobiles. Plus on descend le coussin, plus on augmente l'habitabilité verticale et plus on assure le maintien latéral.

Grâce à cette disposition, seuls les coussins ont une structure autoportante ce qui garantit une finition et des accostages périphériques de qualité.

## Revendications

1. siège arrière de véhicule automobile, du type comprenant un dossier (2) et une assise (3) formés d'une armature rigide (8) et d'un garnissage (7), l'assise (3) comportant une partie fixe (5) incluant ladite armature rigide (8) et ledit garnissage (7) et au moins deux coussins (5, 6), caractérisé en ce que lesdits coussins (5, 6) sont intégrés dans l'assise (3) et comportent chacun (5, 6) une armature (5b) et un garnissage (5a), en ce que chaque coussin (5, 6) est monté, au niveau de sa partie avant, articulé sur au moins un axe (11) transversal à la direction longitudinale du véhicule et comporte des moyens (20) de réglage en hauteur de la position de ce coussin (5, 6) et des moyens (50) de verrouillage dudit coussin dans la position désirée et en ce que lesdits moyens (20) de réglage en hauteur de la position de chaque coussin (5, 6) comprennent deux leviers (21, 22) parallèles à la direction longitudinale du véhicule et montés chacun pivotant verticalement sur un élément (24, 25) solidaire du plancher (9) du véhicule, chacun desdits leviers (21, 22) comportant à son extrémité libre un crochet (29, 31) dirigé vers le haut et pénétrant dans une lumière (14, 16) ménagée dans l'armature (5b) du coussin (5, 6) correspondant pour retenir ledit coussin (5, 6) en cas de choc.

2. Siège arrière selon la revendication 1, caractérisé en ce que chaque coussin (5, 6) est disposé dans un logement (3a) ménagé dans l'assise (3).

3. Siège arrière selon la revendication 1, caractérisé en ce que les leviers (21, 22) sont reliés entre eux par un axe transversal (27) et comportent à leur extrémité libre un pion (28, 30) perpendiculaire auxdits leviers (21, 22) et coopérant chacun avec une rampe (13, 15) fixée à la partie inférieure et à l'arrière de l'armature du coussin (5, 6) correspondant.

4. Siège arrière selon la revendication 1 ou 2, caractérisé en ce que chaque coussin (5,6) comporte un organe de rappel (32) en position haute.

5. Siège arrière selon l'une quelconque des revendications précédentes, caractérisé en ce que l'organe de rappel est formé par un ressort à spirale (32) dont une extrémité (32a) est reliée à la platine (23) et dont l'autre extrémité est reliée à l'axe (27) de liaison des deux leviers (21, 22).

6. Siège arrière selon l'une quelconque des revendications 1 à 3, caractérisé en ce que les moyens (20) de verrouillage du coussin (5, 6) dans la position désirée sont formés par un secteur denté (51) ménagé sur un (22) desdits leviers (21, 22) et par un verrou (52) monté pivotant au moyen d'un axe d'articulation (53) sur l'aile (25) de la platine (23) comportant ce levier (22) ; ledit verrou (52) étant pourvu à son extrémité opposée à celle comportant l'axe d'articulation (53), de dents (54) coopérant avec ledit secteur denté (51).

7. Siège arrière selon la revendication 6 caractérisé en ce que les moyens (20) de verrouillage comprennent un organe (55) de déplacement du verrou (52) entre une position de verrouillage dans laquelle les dents (54) du verrou (52) sont engrenées avec les dents du secteur denté (51) et une position de déverrouillage dans laquelle les dents (54) dudit verrou (52) sont dégagées des dents dudit secteur denté (51).

8. Siège arrière selon la revendication 7, caractérisé en ce que l'organe de déplacement du verrou (52) est formé par un levier (55) en forme de B monté sur l'aile (25) de la platine (23) comportant ce verrou (52), l'extrémité d'une branche (58) du levier (55) étant muni d'un trou oblong (60) dans lequel pénètre un ergot (61) solidaire du verrou (52) et l'extrémité de l'autre branche (59) de ce levier (55) étant reliée à une sangle (62) de commande du pivotement dudit levier (55) et dudit verrou (52).

9. Siège arrière selon les revendications 6 et 7, caractérisé en ce que l'axe d'articulation (53) du verrou (52) comporte un ressort de torsion (63) pour le rappel dudit verrou (52) en position de verrouillage sur le secteur denté (51) du levier (22).

## Patentansprüche

1. Kraftfahrzeug-Rücksitz des Typs mit einer Rückenlehne (2) und einem Sitz (3), die aus einem starren Beschlag (8) und einer Verkleidung (7) gebildet sind, wobei der Sitz (3) einen festen Teil (5), der den starren Beschlag (8) und die Verkleidung (7) enthält, und wenigstens zwei Polster (5, 6) umfaßt, dadurch gekennzeichnet, daß die Polster (5, 6) in den Sitz (3) integriert sind und jeweils (5, 6) einen Beschlag (5b) und eine Verkleidung (5a) enthalten, daß jedes Polster (5, 6) auf Höhe seines vorderen Teils an wenigstens einer zur Längsrichtung des Fahrzeugs transversalen Achse (11) angelenkt ist und Mittel (20) zum Einstellen der Höhe der Position dieses Polsters (5, 6) sowie Mittel (50) zum Verriegeln des Polsters in der gewünschten Position umfaßt und daß die Mittel (20) zum Einstellen der Höhe der Position jedes Polsters (5, 6) zwei Hebel (21, 22), die zur Längsrichtung des Fahrzeugs parallel sind und jeweils vertikal schwenkbar an einem mit dem Boden (9) des Fahrzeugs fest verbundenen Element (24, 25) angebracht sind, wobei jeder dieser Hebel (21, 22) an seinem freien Ende einen Haken (29, 31) aufweist, der nach oben gerichtet ist und in ein im Beschlag (5b) des entsprechenden Polsters (5, 6) ausgespartes Langloch (14, 16) eindringt, um das Polster (5, 6) bei einem Stoß festzuhalten.

2. Rücksitz nach Anspruch 1, dadurch gekennzeichnet, daß jedes Polster (5, 6) in einem im Sitz (3) ausgesparten Aufnahmesitz (3a) angeordnet ist.

3. Rücksitz nach Anspruch 1, dadurch gekennzeichnet, daß die Hebel (21, 22) untereinander über eine transversale Welle (27) verbunden sind und an ihrem freien Ende einen Ansatz (28, 30) aufweisen, der zu den Hebeln (21, 22) senkrecht ist und jeweils mit einer Rampe (13, 15) zusammenwirkt, die am unteren und hinteren Teil des Beschlags des entsprechenden Polsters (5, 6) befestigt ist.

4. Rücksitz nach Anspruch 1 oder 2, dadurch gekennzeichnet, daß jedes Polster (5, 6) ein Element (32) zur Rückstellung in die obere Position umfaßt.

5. Rücksitz nach einem der vorhergehenden Ansprüche, dadurch gekennzeichnet, daß das Rückstellelement aus einer Spiralfeder (32) gebildet ist, wovon ein Ende (32a) mit der Grundplatte (23) verbunden ist und das andere Ende mit der Verbindungswelle (27) der beiden Hebel (21, 22) verbunden ist.

6. Rücksitz nach einem der Ansprüche 1 bis 3, dadurch gekennzeichnet, daß die Mittel (20) zum Verriegeln des Polsters (5, 6) in der gewünschten Position durch einen Zahnradsektor (51), der an einem (22) der Hebel (21, 22) ausgebildet ist, und durch eine Klinke (52), die mittels einer Schwenkachse (53) an dem diesen Hebel (22) aufweisenden Schenkel (25) der Grundplatte (23) schwenkbar angebracht ist, gebildet sind; wobei die Klinke (52) an ihrem Ende, das jenem gegenüberliegt, das die Schwenkachse (53) aufweist, mit Zähnen (54) versehen ist, die mit dem Zahnradsektor (51) zusammenwirken.

7. Rücksitz nach Anspruch 6, dadurch gekennzeichnet, daß die Verriegelungsmittel (20) ein Element (55) zum Verschieben der Klinke (52) zwischen einer Verriegelungsposition, in der die Zähne (54) der Klinke (52) mit den Zähnen des Zahnradsektors (51) in Eingriff sind, und einer Entriegelungsposition, in der die Zähne (54) der Klinke (52) nicht mit den Zähnen des Zahnradsektors (51) in Eingriff sind, umfassen.

8. Rücksitz nach Anspruch 7, dadurch gekennzeichnet, daß das Element zum Verschieben der Klinke (52) durch einen Hebel (55) in Form eines B gebildet ist, das an dem diese Klinke (52) aufweisenden Schenkel (25) der Grundplatte (23) angebracht ist, wobei das Ende eines Arms (58) des Hebels (55) mit einem Langloch (60) versehen ist, in das ein mit der Klinke (52) verbundener Vorsprung (61) eindringt, und das Ende des anderen Arms (59) dieses Hebels (55) mit einem Gurt (62) zum Steuern der Schwenkung des Hebels (55) und der Klinke (52) verbunden ist.

9. Rücksitz nach den Ansprüchen 6 und 7, dadurch gekennzeichnet, daß die Schwenkachse (53) der Klinke (52) eine Torsionsfeder (63) für die Rückstellung der Klinke (52) in die Verriegelungsposition am Zahnradsektor (51) des Hebels (22) umfaßt.

## Claims

1. Rear seat for motor vehicles, of the type comprising a seat back (2) and a seat squab (3) formed of a rigid frame (8) and upholstery (7), the seat squab (3) having a fixed portion (5) including the said rigid frame (8) and the said upholstery (7) and at least two cushions (5, 6), characterised in that the said cushions (5, 6) are integrated into the seat squab (3) and each (5, 6) comprises a frame (5b) and upholstery (5a), in that each cushion (5, 6) is mounted, in the region of its front portion, to pivot about at least one axis (11) transverse to the direction of the length of the vehicle and has means (20) for adjusting in height the position of this cushion (5, 6) and means (50) for locking the said cushion in the desired position and in that the said height adjusting means (20) for each cushion (5, 6) comprise two levers (21, 22) parallel to the direction of the length of the vehicle and each mounted to pivot vertically on an element (24, 25) fixed with respect to the floor (9) of the vehicle, each of the said levers (21, 22) having on its free end a hook (29, 31) pointing upwards and extending through an opening (14, 16) provided in the frame (5b) of the corresponding cushion (5, 6) for holding the said cushion (5, 6) against shocks.

2. Rear seat according to Claim 1, characterised in that each cushion (5, 6) is arranged in a recess (3a) provided in the seat squab (3).

3. Rear seat according to Claim 1, characterised in that the levers (21, 22) are connected together by a transverse spindle (27) and have at their free end a pin (28, 30) perpendicular to the said levers (21, 22) and each co-operating with a ramp (13, 15) secured to the lower part and at the rear of the frame of the corresponding cushion (5, 6).

4. Rear seat according to Claim 1 or 2, characterised in that each cushion (5, 6) has a member (32) urging it to an upper position.

5. Rear seat according to any one of the foregoing claims, characterised in that the urging member is formed by a helical spring (32) of which one end (32a) is connected to the plate (23) and of which the other end is connected to the spindle (27) connecting the two levers (21, 22).

6. Rear seat according to any one of claims 1 to 3, characterised in that the means (20) for locking the cushion (5, 6) in the desired position are formed by a toothed sector (51) provided on one (22) of the said levers (21, 22) and by a detent (52) pivotally mounted by means of a pivot pin (53) on the flange (25) of the plate (23) having this lever (22); the said detent (52) being provided on its end opposite to that having the pivot pin (53) with teeth (54) co-operating with the said toothed sector (51).

7. Rear seat according to Claim 6 characterised in that the locking means (20) comprise a member (55) for displacing the detent (52) between a locking position in which the teeth (54) of the detent (52) are engaged with the teeth of the toothed sector (51) and a released position in which the teeth (54) of the said detent (52) are disengaged from the teeth of the said toothed sector (51).

8. Rear seat according to Claim 7, characterised in that the member for displacing the detent (52) is formed by a lever (55) of B shape mounted on the flange (25) of the plate (23) having this detent (52), the end of one limb (58) of the lever (55) being provided with an oblong hole (60) into which enters a pin (61) fixed to the detent (52) and the end of the other limb (59) of this lever (55) being connected to an operating strap (62) for pivoting the said lever (55) and the said detent (52).

9. Rear seat according to Claims 6 and 7, characterised in that the pivot pin (53) of the detent (52) has a torsion spring (63) for urging the said detent (52) into a locking position on the toothed sector (51) of the lever (22).
